# EUROPÄISCHE PATENTANMELDUNG

(11) **EP 2 656 945 A1**
(43) Veröffentlichungstag der Anmeldung: **30.10.2013**
(21) Anmeldenummer: 12002962.4
(22) Anmeldetag: 26.04.2012
(51) Int. Cl.: B22D 11/10, B22D 11/103, B22D 41/50

(54) **Feuerfestes Giessrohr für eine Kokille zum Stranggiessen von Metallschmelze**

(71) Anmelder: SMS Concast AG, 8027 Zürich (CH)
(72) Erfinder: Dratva, Christian, 8052 Zürich (CH)
(74) Vertreter: Luchs, Willi

(57) **Zusammenfassung**

Ein feuerfestes Giessrohr für eine Kokille zum Stranggiessen von Metallschmelze ist mit einem Oberteil (3, 33) und einem während dem Giessen in die Kokillen-Innenraum (6) Metallschmelze eintauchenden Unterteil (5, 35) versehen. Dieser Oberteil (3, 33) des Giessrohres (2, 32) weist einen beim Giessen oberhalb der Kokille (1) positionierten trichterförmigen oder ähnlich geformten Einlauf (4, 34) auf, während dessen Unterteil (5, 35) in die Metallschmelze im Kokillen-Innenraum (6) eintauchbar und rohr- oder andersförmig ausgebildet ist. Damit fliesst die Stahlschmelze annähernd als gleichmässige Strömung mit homogener und stabiler Verteilung in die Kokille.

## Beschreibung

Die Erfindung betrifft ein feuerfestes Giessrohr für eine Kokille zum Stranggiessen von Metallschmelze.

Bei dem Giessrohre dieser Art dienen bekanntlich dazu, die Metallschmelze aus einem Giessgefäss in die Kokille zu leiten, in der sie zur Bildung des Metallstranges abgekühlt wird. Beim kontinuierlichen Stranggiessen werden immer schnellere Giessgeschwindigkeiten angestrebt. Je schneller gegossen wird, umso schneller und gleichmässiger muss aber auch die Strangschale in der Kokille wachsen, um eine erstarrte Strangschale mit ausreichender Festigkeit zu bilden. Um das sicherzustellen, muss die Verteilung der Schmelze in der Kokille genau gesteuert werden.

Höhere Giessgeschwindigkeiten bzw. höherwertige Qualitätseigenschaften, wie Oberflächengüte, Kernporosität, Seigerung, Reinheitsgrad etc., sollen für einen grossen Bereich unterschiedlicher Metallgüten erzielt werden.

Bei dem sogenannten "offene Gießen", bei dem die Metallschmelze mittels Freilaufdüse von einem Zwischenbehälter oder ähnlichem in die Kokille abgegossen wird, bewirkt der von diesen erzeugte Giessstrahl in dem Schmelzenbad in der Kokille unkontrollierbare Turbulenzen. Der freifallende Giessstrahl bewirkt aber in dem Schmelzenbad unkontrollierbare Strömungsverhältnisse, durch welche im Bereich der Erstarrungsfront hohe örtliche Strömungsgeschwindigkeiten der Schmelze auftreten können, und dadurch lokales Wiederaufschmelzen der Strangschale entstehen kann. Weiterhin können nicht homogene Strömungsgeschwindigkeitsverteilungen in der Kokille zu ungleichmäßigem Schalenwachstum führen. Daraus resultieren nicht erwünschte Verzerrungen der Querschnittsgeometrie des Stranges sowie Schwachstellen der Stranggiessschale.

Eine Giessanlage mit einer Einlaufdüse aus Ausgusselement ist in der WO 2006/108874 geoffenbart. Zwischen der Einlaufdüse und der Kokille befindet sich ein auf dieser sitzender Aufsatz zur Aufnahme der Stahlschmelze, der mit einer oder mehrerer Schikanen zur Beruhigung des Schmelzestroms versehen ist. Da die Auslassöffnung des Aufsatzes mit der Kokillen-Oberkante bündig ist, kann der Aufsatz nicht in den Kokillen-Innenraum eingetaucht werden. Eine solche Anordnung ist aufwendig und hat Nachteile, sowohl hinsichtlich des damit erzielbaren Beruhigungseffekts als auch der sich ergebenden Abdichtungsprobleme zwischen dem Aufsatz und der Kokille.

Der Erfindung liegt demgegenüber die Aufgabe zugrunde, ein feuerfestes Giessrohr der eingangs genannten Art zu schaffen, mit dem verbesserte Einlaufströmungsverhältnisse in die Kokille und damit verschiedene Vorteile, wie höhere Giessgeschwindigkeit, Senkung der Durchbruchraten und/oder Qualitätssteigerung auch bei hohen spezifischen Durchsätzen des Stranggiessproduktes erzielbar sind.

Diese Aufgabe ist erfindungsgemäss dadurch gelöst, dass der Oberteil des Giessrohrs einen beim Giessen oberhalb der Kokille positionierten trichterförmigen oder ähnlich geformten Einlauf aufweist, während dessen Unterteil in die Metallschmelze im Kokillen-Innenraum eingetaucht ist und rohr- oder andersförmig ausgebildet ist.

Durch die erfindungsgemässe Ausgestaltung des Giessrohres fliesst die Stahlschmelze annähernd als gleichmässige Strömung mit homogener und stabiler Verteilung in die Kokille. Das ermöglicht einen besser steuerbaren Strömungsverlauf der Metallschmelze und somit eine verbesserte Schalenbildung in der Kokille, dies auch bei hohen Giessgeschwindigkeiten gewährleistet ist. Ausserdem ist der obere Innenraum der Kokille durch den Oberteil des Giessrohrs vor Metallspritzern geschützt.

Als zusätzlicher Vorteil ist die Entkoppelung des Eingusses aus dem Tundish in die Kokille zu erwähnen. Dadurch kann, unabhängig vom Tundishauslass für mehrere gleichzeitig gegossene Stränge, das jeweilige einzelne Giessrohr optimal auf die Kokillenposition ausgerichtet werden.

Die Erfindung sieht ferner vor, dass der Oberteil des Giessrohrs direkt auf die Kokille abstützbar ist. Auf diese Weise kann der Kokillen-Innenraum mit einer entsprechenden Dimensionierung des Einlauftrichters wie abgedeckt werden. Ausserdem erfolgt die Halterung des Giessrohrs durch gesonderte Stützmittel oder durch die Kokille selbst.

Der trichterförmige Einlauf ist bei einer bevorzugten Ausführungsform der Erfindung kegelförmig ausgebildet. Sein Innenraum kann ganz oder teilweise abgeflacht sein.

Der Einlauf kann auch erfindungsgemäss mindestens einen im Einlauftrichter sitzenden Einsatzkörper mit einem Stützflansch und einem stirnseitig geschlossenen Ansatz mit radialen Auslassöffnungen enthalten. Ein solcher Einsatzkörper trägt zur gleichmässigeren Verteilung und Beruhigung der einlaufenden Schmelze bei und kann form- und/oder werkstoffmässig entsprechend der jeweiligen Einsatzbedingungen ausgeführt sein.

Unterhalb des Einlauftrichters ist das Giessrohr durchgehend rohrförmig ausgebildet. Das Giessrohr kann aber auch im unteren Abschnitt dem Giessformat ähnlich sein, beispielsweise rund oder abgerundet für Quadrat- oder Rechteckformate, beziehungsweise abgeflacht etwa für Kokillen mit einem verbreiteten Querschnitt. In beiden Fällen kann es dort zusätzlich mit seitlichen Längsschlitzen versehen sein, die dazu beitragen, dass der Schmelzenfluss in die Kokille verlangsamt und weitgehend gleichmässig stattfindet. Ferner wird ein besserer Austausch mit der bereits dort in der Kokille befindlichen Schmelze erzielt.

Ebenfalls zu diesem Zweck ist erfindungsgemäss optional eine Abdeckplatte vorgesehen, die in der Kokille auf der Schmelze schwimmend aufliegt. Sie bewirkt primär eine Wellenminimierung des Badspiegels. Die Abdeckplatte ist ein- oder mehrteilig ausgebildet. Vorzugsweise ist sie von der Kokillen-Innenwand durch Abstandhalter beabstandet, die sicherstellen, dass die Abdeckplatte keinen Kontakt mit den Innenwandungen der Kokille haben kann und somit keine Beeinträchtigung der Schmiermittelzufuhr bzw. der Schalenbildung in der Kokille entsteht. Zudem kann die Rührerleistung durch elektromagnetische Rührer und dabei die Rotationsbewegungen der Schmelze erhöht werden, ohne dass sich zu hohe Wellen an der Ecke des Kokillenrohres aufbauen oder Giesshilfsmittel in die Schmelze eingezogen werden.

Ausführungsbeispiele sowie weitere Vorteile der Erfindung sind nachfolgend anhand der Zeichnung näher erläutert. Es zeigen:
- Fig. 1: eine Kokille zum Stranggiessen von Stahl mit einem erfindungsgemässen feuerfesten Giessrohr und einer feuerfesten Abdeckplatte, in teilweisem Schnitt perspektivisch dargestellt;
- Fig. 2: eine schematische Seitenansicht der Kokille und dem Giessrohr nach Fig. 1; und
- Fig. 3: bis Fig. 5 eine Variante eines erfindungsgemässen Giessrohres in perspektivischer Darstellung bzw. in Seitenansichten.

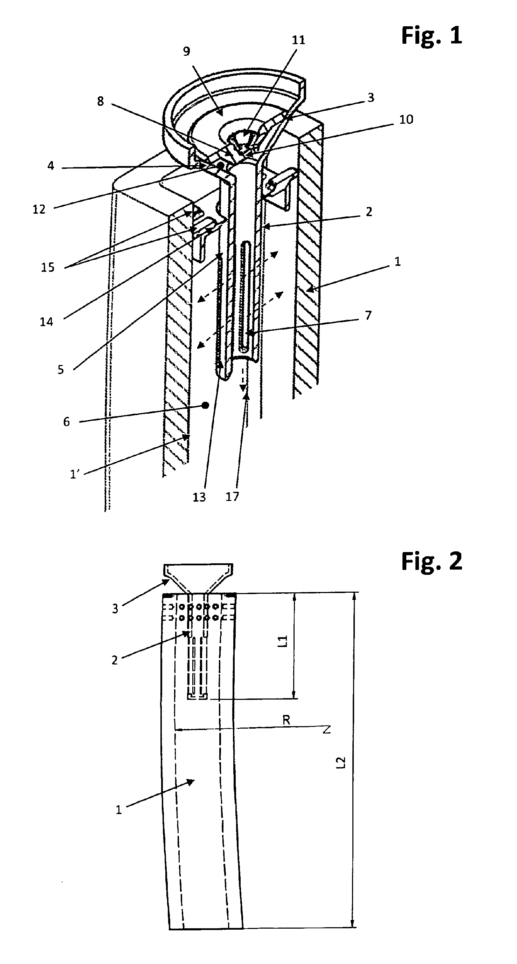

Eine andeutungsweise gezeigte Kokille 1 gemäss Fig. 1 einer Stranggiessanlage für Stahlproduktion ist vorzugsweise für hohe Giessgeschwindigkeiten bis zu 10 m/min ausgelegt. Die Versorgung der Kokille 1 mit der Metallschmelze, insbesondere Stahl, erfolgt durch ein feuerfestes Giessrohr 2 mit einem sich im Oberteil 3 des Giessrohrs befindlichen trichterförmigen Einlauf 4 und einem sich daran anschliessenden rohrförmigen Unterteil 5, der beim Giessen nahezu vollständig im Kokillen-Innenraum 6 eingetaucht ist. Dort ist auch der Ausguss 7 des Giessrohres angeordnet. Das Giessrohr 2 besteht aus einem herkömmlichen keramischen Werkstoff und ist durch übliche Herstellungsverfahren produziert.

Der trichterförmige Einlauf 4 kann in einer oberhalb der Kokille 1 angeordneten, nicht näher gezeigten Halterung fixiert sein. Er kann aber auch direkt auf der Kokille 1 abgestützt sein. Der Einlauftrichter 4 ist vorteilhaft mit seinem oberen Aussenumfang so dimensioniert, dass er beim Giessen einen Schutz der Kokille 1 gegen Spritzer der abfliessenden Schmelze ermöglicht. Der im Oberteil 3 kegelförmig ausgebildete Einlauftrichter 4 mit seinem Innenraum dient zur Aufnahme der Schmelze, die ihm aus einem nicht dargestellten metallurgischen Gefäss, etwa einem Tundish mit einer Freilaufdüse zugeführt wird.

Ausserdem befindet sich im Innenraum des Trichters ein Einsatzkörper 8 mit einem ringförmigen Stützflansch 9 und einem mittigen Ansatz 10, der unten geschlossen ist und radiale Auslassöffnungen 11 aufweist, durch welche die Schmelze in einen vom Einlauftrichter 4 und dem Einsatzkörper 8 gebildeten Zwischenraum 12 des Trichters hineinströmt. Durch diesen Einsatzkörper 8, der vorzugsweise in den Trichter eingelegt ist, wird die Schmelze abgebremst und gleichmässig verteilt nach unten in die Kokille geführt.

Der erfindungsgemässe Einlauftrichter 4 bewirkt im Zusammenwirken mit dem Einsatzkörper 8, dass die einfliessende Schmelze sich dort anstaut und sich dabei soweit gleichmässig verteilt, dass sie durch den rohrförmigen Abschnitt 5 und den Auslass 7 in den Innenraum 6 der Kokille als homogene Strömung hineinfliesst. Dadurch ist es möglich, den Erstarrungsprozess der Schmelze in der Kokille so zu steuern, dass höhere Giessgeschwindigkeiten erreichbar sind.

Da der Beruhigungseffekt des Einlauftrichters 3 grundsätzlich auch ohne den Einsatzkörper 8 wirksam ist, ist dieser im Prinzip entbehrlich, wenn durch den Einlauftrichter allein eine ausreichende Beruhigung der Schmelze bewirkt wird. Bei Verwendung eines Einsatzkörpers kann dieser so ausgelegt werden, dass er werkstoff- und/oder formmässig optimal den jeweiligen Einsatzbedingungen entspricht.

Es können ferner auch zwei in einem Abstand übereinander angeordnete Einsatzkörper im Einlauf trichter eingebaut sein, bei dem beispielsweise die obere eine zentrale Öffnung und die untere Platte mit mehreren aussenseitigen Öffnungen versehen ist.

Das Giessrohr 2 ist unterhalb des Einlauftrichters 4 durchgehend rohrförmig ausgebildet und es weist eine stirnseitige nach unten verlaufende Auslassöffnung 17 sowie seitliche Längsschlitze 13 auf, durch welche eine gleichmässigere Schmeizenzufuhr in den Innenraum der Kokille bewirkt wird.

Das Giessrohr 2 könnte unten aber auch geschlossen sein, so dass die Schmelze nur seitlich austritt. Auch die Anzahl und die Höhe der Längsschlitze 13 ist optimal für die gegebenen Giessparameter anpassbar.

Die Baulängen des Giessrohres 2 und der Kokille 1 sind gemäss Fig. 2 so aufeinander abgestimmt, dass der rohrförmige Abschnitt 5 des Giessrohrs mit der Eintauchtiefe I₁ vorzugsweise ca. 1/3 der Kokillen-Länge I₂ in den Innenraum 6 der Kokille eintaucht. Damit wird bezweckt, dass die ausfliessende Schmelze beim Auslass 7 des Giessrohrs einen marginalen Einfluss auf die Badoberfläche hat. Selbstverständlich kann diese Eintauchtiefe I₁ je nach Art der Kokille und den Giessbedingungen variiert werden.

Wenn aus Gründen der Prozessführung die neue über das Giessrohr zugeführte Schmelze zunächst in den giessspiegelnahen Bereich fliessen soll, kann die Eintauchtiefe des Giessrohres entsprechend reduziert werden. Diese Form der Prozessführung bewirkt beispielweise eine Reduzierung der Seigerung und der Porosität durch höheren Überhitzungsabbau in der Kokille.

Im Rahmen der Erfindung ist in die Kokille 1 optional eine axial frei beweglich auf der Schmelze schwimmende Abdeckplatte 14 eingelegt, mit welcher neben dem Schutz des Badspiegels auch eine Beruhigung des Badspiegels bewirkt wird. Die Abdeckplatte 14 kann ein- oder mehrteilig ausgebildet sein, letzteres insbesondere bei Giessrohren mi einem verbreiteten Auslass. Sie ist von der Kokillen-Innenwand 1' durch Abstandhalter 15 mit einer geringen Distanz im Millimeterbereich beabstandet. Damit ist eine freie Beweglichkeit dieser Abdeckplatte 14 in Achsrichtung der Kokille sichergestellt und die Schmiermittelzuführung, wie ein Ölgemisch oder Pulver, an der Innenwand 1' der Kokille 1 ermöglicht. Diese Abdeckplatte 15 ist ferner aus herkömmlichen keramischen Werkstoffen herstellbar. Es könnten auch separate Führungselemente als Abstandhalter verwendet werden.

Diese auf der Stahlschmelze schwimmende Abdeckplatte eignet sich im Rahmen der Erfindung sehr vorteilhaft auch als Bestandteil einer nicht näher gezeigten Giessspiegelmesseinrichtung, bei welcher beispielsweise optisch, mittels Laser oder dergleichen von oberhalb der Kokille die aktuelle Badhöhe gemessen wird.

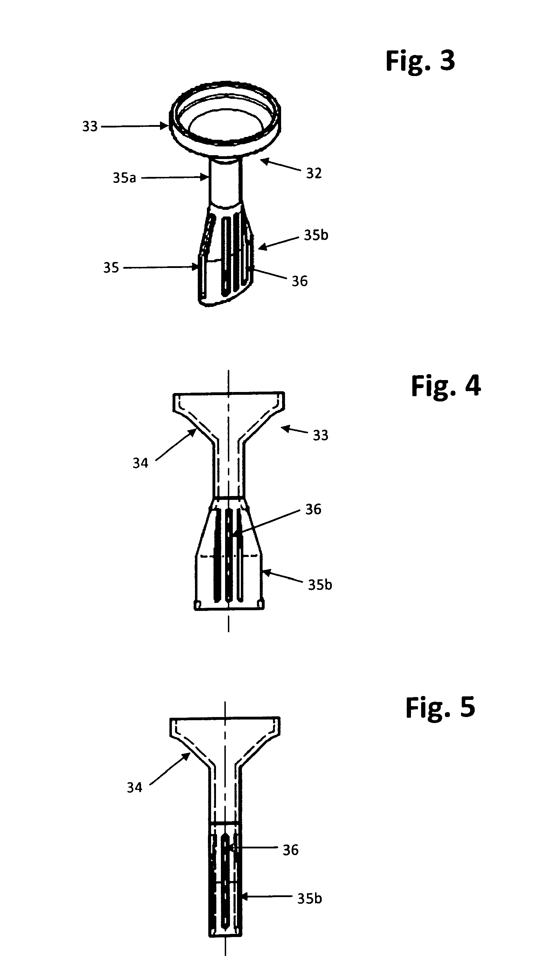

Fig. 3 bis Fig. 5 zeigen beispielhaft eine Ausführungsvariante eines feuerfesten Giessrohres 32, welches einen Oberteil 33 mit einer trichterförmigen Ausbildung und einen Unterteil 35 umfasst, welcher im oberen Teilabschnitt 35a rohrförmig ausgebildet ist und dann in einen unteren abgeflachten Teilabschnitt 35b übergeht. Dieses Giessrohr 32 eignet sich entsprechend für eine Kokille mit rechteckigem Querschnitt.

Wie aus Fig. 4 und Fig. 5 ersichtlich ist, sind im abgeflachten Teilabschnitt 35b wiederum seitlich austretende Längsschlitze 36 vorgesehen, wobei im verbreiterten Teilabschnitt deren drei sich annähernd radial nach aussen erstreckende Längsschlitze, indessen beim schmalen Teilabschnitt ein Längsschlitz vorgesehen ist. Ferner ist dieses Giessrohr 32 unten geschlossen, könnte aber auch einen schlitzförmigen Auslass aufweisen.

Die Erfindung ist mit den oben erläuterten Ausführungsbeispielen ausreichend dargetan, sie könnte aber noch in anderen Varianten ausgestaltet sein. So ist zum Beispiel die Wirkungsweise des Einlauftrichters unabhängig von der Ausgestaltung des Auslasses am unteren Ende des Giessrohres ausführbar.

Der Einlauf eines Giessrohres könnte auch anstatt eines Trichters andersförmig ausgebildet sein, wie zum Beispiel topfförmig. Auch der Einsatzkörper 8 könnte andersförmig ausgebildet sein und beispielsweise nur eine nach unten führende Auslassöffnung aufweisen. Desgleichen könnte der Unterteil anstatt rohrförmig auch sich im Durchmesser verbreiternd oder verschmälernd ausgebildet sein.

Das Giessrohr könnte beim Trichter im Prinzip auch direkt auf der Kokille abgestützt sein.

Bei einer Freilaufdüse beim oberhalb der Kokille befindlichen Tundish kann in an sich herkömmlicher Weise ein den Schmelzestrahl abdichtend umgebender Balg und allenfalls ein in diesen eingelassenes Schutzgas vorgesehen sein.

## Patentansprüche

1. Feuerfestes Giessrohr für eine Kokille zum Stranggiessen von Metallschmelze, mit einem Oberteil (3, 33) und einem während dem Giessen in die Kokillen-Innenraum (6) Metallschmelze eintauchenden Unterteil (5, 35), **dadurch gekennzeichnet, dass**
der Oberteil (3, 33) des Giessrohres (2, 32) einen beim Giessen oberhalb der Kokille (1) positionierten trichterförmigen oder ähnlich geformten Einlauf (4, 34) aufweist, während dessen Unterteil (5, 35) in die Metallschmelze im Kokillen-Innenraum (6) eintauchbar und rohr- oder andersförmig ausgebildet ist.

2. Giessrohr nach Anspruch 1, **dadurch gekennzeichnet, dass** das Giessrohr (2, 32) mit seinem Oberteil (3, 33) direkt auf die Kokille (1) abstützbar ist.

3. Giessrohr nach Anspruch 1 oder 2, **dadurch gekennzeichnet, dass** der Einlauf (4, 34) kegel-, topf- oder andersförmig ausgebildet ist.

4. Giessrohr nach einem der vorhergehenden Ansprüche 1 bis 3, **dadurch gekennzeichnet, dass**
der Innenraum des Einlaufs (4) ganz oder teilweise abgeflacht ist.

5. Giessrohr nach einem der vorhergehenden Ansprüche 1 bis 4, **dadurch gekennzeichnet, dass**
der Einlauf (4) einen Einsatzkörper (8) mit einem Stützflansch (9) und einem stirnseitig geschlossenen Ansatz (10) mit wenigstens einer Auslassöffnung (11) enthält.

6. Giessrohr nach einem der vorhergehenden Ansprüche 1 bis 5, **dadurch gekennzeichnet, dass**
der Unterteil (5) des Giessrohres mit einer Länge (l₁) in der Kokille (1) vorzugsweise um 1/3 der Kokillenlänge (l₂) eintauchbar ist.

7. Giessrohr nach einem der vorhergehenden Ansprüche 1 bis 6, **dadurch gekennzeichnet, dass**
der Unterteil (5) des Giessrohres durchgehend rohrförmig ausgebildet ist und seitliche Längsschlitze (13) oder dergleichen aufweist.

8. Giessrohr nach einem der vorhergehenden Ansprüche 1 bis 6, **dadurch gekennzeichnet, dass**
der Unterteil (35) des Giessrohrs im oberen Abschnitt (35a) rohrförmig und im unteren Abschnitt (35b) dem entsprechenden Giessformat ähnlich abgeflacht ist.

9. Giessrohr nach einem der vorhergehenden Ansprüche 1 bis 8, **dadurch gekennzeichnet, dass**
der Unterteil (5, 35) des Giessrohrs im unteren Abschnitt (5b, 35b) mit seitlichen Längsschlitzen (13, 36) versehen ist.

10. Feuerfeste Abdeckplatte für eine Kokille zum Stranggiessen von Metallschmelzen, mit einem Giessrohr, insbesondere einem Giessrohr nach einem der vorangegangenen Ansprüche 1 bis 9, **dadurch gekennzeichnet, dass**
die Abdeckplatte (14) in die Kokille (1) relativ zur Kokille und zum Giessrohr in Achsrichtung der Kokille frei beweglich auf der Stahlschmelze schwimmend einlegbar ist.

11. Abdeckplatte nach Anspruch 10, **dadurch gekennzeichnet, dass** sie durch Abstandhalter (15) oder separate Führungselemente von der Kokillen-Innenwand beabstandet ist.

12. Abdeckplatte nach einem der Ansprüche 10 oder 11, **dadurch gekennzeichnet, dass**
sie ein- oder mehrteilig ausgebildet ist.

13. Abdeckplatte nach einem der Ansprüche 10, 11 oder 12, **dadurch gekennzeichnet, dass**
die schwimmend auf der Stahlschmelze einlegbare Abdeckplatte als Bestandteil einer Giessspiegelmesseinrichtung ausgebildet ist.
